# EUROPEAN PATENT SPECIFICATION

(11) **EP 0 571 746 B1**
(45) Date of publication and mention of the grant of the patent: **11.06.1997**
(21) Application number: 93105587.5
(22) Date of filing: 05.04.1993
(51) Int. Cl.: A23C 20/00

(54) **A method of producing and packing a caseous product**
Verfahren zum Herstellen und Verpacken eines käseartigen Produktes
Procédé de préparation et emballage d'un produit caséeux

(30) Priority: 29.04.1992 SE 9201352
(43) Date of publication of application: 01.12.1993
(73) Proprietor: Tetra Laval Holdings & Finance SA, 1009 Pully (CH)
(72) Inventor: Sponholtz, Per, 2820 Gentofte (DK)
(74) Representative: Sundell, Hakan

(56) References cited:
- EP-A- 0 261 586
- US-A- 4 537 789
- US-A- 4 678 677
- PATENT ABSTRACTS OF JAPAN, vol. 7, no. 263 (C-196)(1408), 24th November 1983; & JP-A-58 146 237 (AJINOMOTO K.K.) 31-08-1983

## Description

### TECHNICAL FIELD

The present invention relates to a method of producing and packing a caseous product by adding to a fat and protein-containing starting material selected for producing the end product at least one substance capable of coagulating the starting material and thereafter packing the starting material in packages ready for distribution of the product in such a manner and under such conditions that coagulation of the starting material is caused to take place substantially entirely within the packages.

### BACKGROUND ART

A method of the type described above is previously known from, for example, Swedish Patent Application No. 9003540-3 SE-B-467388. According to the Swedish Patent Application, a matured cheese is thus produced and prepared for distribution employing milk as the fat and protein-containing starting material for producing the cheese. In this instance, the milk is first concentrated to a total solids (TS) corresponding to the desired TS in the finished product and additives for coagulation of the milk and other selected additives for producing the cheese are thereafter added. The thus obtained mixture of concentrated milk and additives is finally packed in packages ready for distribution of the cheese in such a manner that both the coagulation of the milk and the forming and maturing of the cheese are caused to take place substantially entirely within the packages.

The method according to Swedish Patent Application No. 9003540-3 enjoys numerous process-engineering advantages over the more traditional method of producing cheese and, for example, is readily carried into effect on a rational, industrial scale using modern packaging machines of the type which forms, fills and seals the packages.

### OBJECT OF THE INVENTION

However, according to the present invention it has proved that the above disclosed prior art method can be further improved on in both economical and nutrition physiological respects, and one object of the present invention is, therefore, to propose a method which has been improved in the above respects.

### SOLUTION

This object has been attained according to the present invention in that the method described by way of introduction has been given the characterizing feature that the starting material selected for producing the product includes both animal and vegetable fat and protein.

Since vegetable fat and protein command a considerably lower price than fat and protein of animal origin, in particular milk, which is employed in the method according to the above-disclosed Swedish Patent Application, the present invention thus makes possible cheesemaking utilizing a considerably cheaper fat and protein-containing starting material than that proposed in the above Swedish Patent Application. By employing vegetable fat, a more favourable P/S quotient (the relationship between polyunsaturated and saturated fatty acids in the fat) may also be achieved in the finished cheese product which, thereby, is a particularly favourable food product from the point of view of nutritional physiology. In addition, milk proteins may promote allergies in certain humans, but by replacing such proteins with vegetable proteins, it is thus possible according to the present invention to produce a cheese product which may be rendered completely harmless even to such hypersensitive people.

Further practical and advantageous embodiments of the method according to the present invention have moreover been given the characterizing features as set forth in the appended subclaims.

### BRIEF DESCRIPTION OF THE ACCOMPANYING DRAWING

The present invention will now be described in greater detail hereinbelow, with particular reference to the accompanying Drawing which schematically illustrates an apparatus for reducing the method according to the present invention into practice.

### DESCRIPTION OF PREFERRED EMBODIMENT

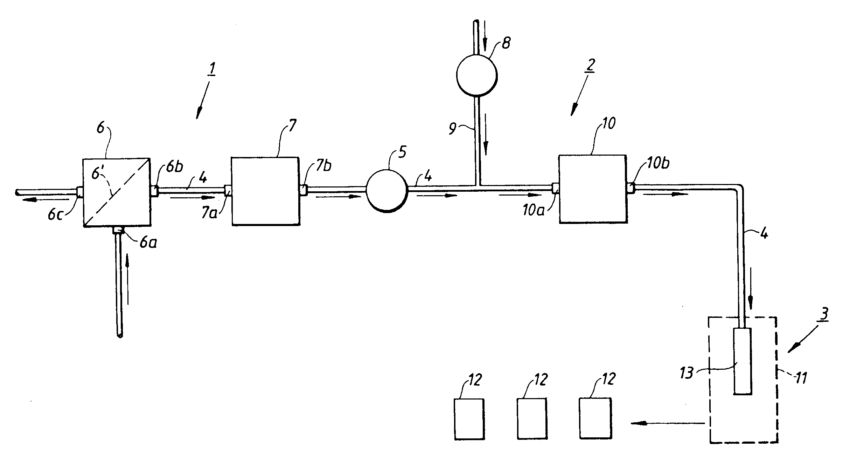

The apparatus illustrated in Fig. 1 essentially comprises a concentration/heating station 1, a metering/mixing station 2 and a filling station 3 which are interconnected with one another in this order by a process conduit 4. A pump 5 allocated to the process conduit 4 is disposed between the concentration/heating station 1 and the metering/mixing station 2.

The concentration/heating station 1 is provided, first, with a concentration unit 6 with an inlet 6a for fat and protein-containing starting material, an outlet 6b for concentrated starting material and an outlet 6c for separated liquid, and, secondly, with a heating unit 7 provided with an inlet 7a and an outlet 7b, the inlet 7a being in communication with the outlet 6b of the concentration unit 6 through the above-mentioned process conduit 4.

The concentration unit 6 may, for example, be an ultrafiltration apparatus of per se known type whose filter 6' has such pore size that all proteins, fats and other starting components valuable for the cheesemaking which occur in the starting material are retained in the concentrated starting material yielded as preproduct retentate as a result of the filtration. The heating unit 7 may, for example, be a conventional heat exchanger with whose help the concentrated starting material is heated to and kept at a sufficiently elevated temperature, eg 70-80°C and for a sufficient length of time, approx. 20 sec., for destroying bacteria in the starting material.

The metering/mixing station 2 comprises a metering pump 8 which, through a conduit 9, is coupled in-line to the process conduit 4, and with the help of which selected additives for producing the product are supplied to the concentrated, heated starting material. The metering/mixing station 2 further includes a mixing unit 10 provided with an inlet 10a and outlet 10b, for mixing the additives with the concentrated material.

The filling station 3 preferably consists of a packaging machine of the type mentioned previously which forms, fills and seals finished packages 12. The filler pipe 13 of the packaging machine 11 is in communication with the outlet 10b from the unit 10 via the conduit 4 in such a manner that the mixture of concentrated starting material and additives may be fed directly from the unit 10 to the filler pipe 13 for enclosure in the packages 12.

Using the above described apparatus, a caseous product is produced and packed in the following manner according to the present invention. In the present example, it is assumed that the fat and protein-containing starting material includes both vegetable and animal fat and protein. The proportion of vegetable fat and protein each in relation to animal fat and protein in the starting material may vary within very broad limits, but is assumed to be between 5 and 75 weight per cent of the total fat and protein content, respectively, of the starting material. The starting material consists of a mixture of a pre-treated, standardized milk of animal origin and a "vegetable milk" which, for example, may be a suspension of fat and proteins extracted in a known manner from, for example, soya beans, groundnuts etc.

The fat and protein-containing starting material (the mixture of pre-treated, standardized milk and vegetable milk) is fed into the concentration unit 6 by means of a conduit 14 connected to the inlet 6a for concentrating the starting material to a total solids corresponding to the desired total solids in the finished product, eg 20-70%. Thus, in the unit 6, a liquid fraction (whey) which is practically completely free of protein, fat and other valuable components occurring in the staring material is separated-off and may freely pass through the filter. The separated-off liquid fraction is led from the unit 6 through the outlet 6b, while the retained, concentrated (protein and fat-enriched) starting material (preproduct retentate) is removed from the unit through the conduit 4 and pumped by means of the pump 5 into and through the heating unit 7 for heat treatment at, for example, 70-80°C. From the heating unit, the material is pumped further through the conduit 4 to the metering/mixing station 2 in which additives selected for coagulating the starting material and chosen from among rennet, Δ - glucon lacton (GDL), CaSO₄ and MgCl₂, together with other selected additives for producing the product are supplied to the material in-line via the conduit 9 with the aid of the pump 8. The mixture of concentrated material and additives is led further through the conduit 4 into the mixing unit 10 in order to mix the additives homogeneously with the concentrated material. From the unit 10, the mixture is fed through the conduit 4 to the filler pipe in the packaging machine 11 for enclosing in packages 12.

In the above-described manner, it is thus possible according to the present invention, to produce and pack a caseous, matured product on a rational, industrial scale. However, it should be observed that the example shown on the Drawing is not intended by any means to restrict the scope of the present invention as defined within the framework of the appended Claims. For example, the standardized milk and the vegetable milk (which together form the fat and protein-containing starting material) may be concentrated and heated separately and, after the heat treatment but before the supply of the additives, be mixed with one another.

## Claims

1. A method of producing and packing a caseous product, wherein a fat and protein-containing starting material selected for producing the end product is added and mixed with a substance capable of coagulating the starting material and the starting material is thereafter packed in packages ready for distribution of the product in such a manner and under such conditions that coagulation of the starting material is caused to take place substantially entirely within the packages, **characterized in that** the starting material selected for producing the product contains as well vegetable as animal fat and protein, wherein the proportion of vegetable fat and protein contained in the starting material is between 5 and 75% by weight of the total fat and protein content, respectively, in the starting material.

2. The method as claimed in Claim 1, **characterized in that** the starting material consists of a mixture of normal milk and vegetable milk.

3. The method as claimed in Claim 2, **characterized in that** the vegetable milk consists of a suspension of fat and proteins extracted in a known manner from soya beans, grounds nuts and others.

4. The method as claimed in any one of the preceding Claims, **characterized in that** said substance capable of coagulating the starting material is selected from the group consisting of rennet, Δ-glucon lacton (GDL), CaSO₄ and MgCl₂.

5. The method as claimed in any one of the preceding Claims, **characterized in that** the starting material is also supplied with one or more other additives desirable for producing the product, such as salts (NaCl and others), aromatic substances, flavourings, acidic cultures, colourants.

## Patentansprüche

1. Verfahren zum Herstellen und Verpacken eines käseartigen Produkts, wobei einem Fett und Proteine enthaltenden Ausgangsmaterial, das zum Herstellen des Endprodukts ausgewählt ist, eine Substanz beigegeben und damit vermischt wird, durch die das Ausgangsmaterial gerinnen kann, und das Ausgangsmaterial dann in Packungen gepackt wird, die zum Vertrieb des Produkts bereit sind, und zwar auf solche Weise und unter solchen Bedingungen, daß man das Ausgangsmaterial im wesentlichen ganz innerhalb der Packungen gerinnen läßt, **dadurch gekennzeichnet, daß** das zur Herstellung des Produkts ausgewählte Ausgangsmaterial sowohl pflanzliches als auch tierisches Fett und Proteine enthält, wobei der Anteil des pflanzlichen Fetts und der Proteine zu dem tierischen Fett und den Proteinen im Ausgangsmaterial zwischen 5 und 75 Gew.-% des gesamten Fett- bzw. Proteingehalts in dem Ausgangsmaterials liegt.

2. Verfahren nach Anspruch 1, **dadurch gekennzeichnet, daß** das Ausgangsmaterial aus einer Mischung aus normaler Milch und pflanzlicher Milch besteht.

3. Verfahren nach Anspruch 2, **dadurch gekennzeichnet, daß** diepflanzliche Milch aus einer Suspension aus Fett und Proteinen besteht, die auf bekannte Weise beispielsweise aus Sojabohnen, Erdnüssen und anderen extrahiert ist.

4. Verfahren nach einem der vorhergehenden Ansprüche, **dadurch gekennzeichnet, daß** die Substanz, die das Ausgangsmaterial gerinnen lassen kann, aus der Gruppe von Lab, Δ-Gluconolacton (GDL), CaSO₄ und MgCl₂ ausgewählt ist.

5. Verfahren nach einem der vorhergehenden Ansprüche, **dadurch gekennzeichnet, daß** dem Ausgangsmaterial auch ein oder mehrere zur Herstellung des Produkts erwünschte Zusätze wie Salze (NaCl und andere), aromatische Substanzen, Geschmacksstoffe, saure Kulturen, Farbstoffe beigegeben werden.

## Revendications

1. Procédé de fabrication et d'emballage d'un produit caséeux, dans lequel une matière de départ contenant des graisses et des protéines, choisie pour la fabrication du produit final, reçoit une addition d'une substance pouvant coaguler la matière de départ et elle est mélangée à cette substance, et la matière de départ est ensuite emballée dans des emballages prêts pour la distribution du produit d'une manière et dans des conditions telles que la coagulation de la matière de départ a lieu sensiblement entièrement dans les emballages,caractérisé en ce que la matière de départ choisie pour la fabrication du produit contient des matières grasses et des protéines d'origine végétale et d'origine animale,et la proportion de matières grasses et de protéines d'origine végétale contenues dans la matière de départ est comprise entre 5 et 75% en poids de la teneur totale en matières grasses et en protéines,respectivement, dans la matière de départ.

2. Procédé suivant la revendication 1, caractérisé en ce que la matière de départ consiste en un mélange de lait normal et de lait végétal.

3. Procédé suivant la revendication 2, caractérisé en ce que le lait végétal consiste en une suspension de matières grasses et de protéines extraites, d'une manière connue, du soja, de l'arachide et autres végétaux.

4. Procédé suivant une quelconque des revendications précédentes, caractérisé en ce que ladite substance capable de coaguler la matière de départ est choisie dans le groupe comprenant présure, Δ-glucone lactone (GDL), CaSO₄ et MgCl₂.

5. Procédé suivant une quelconque des revendications précédentes, caractérisé en ce que la matière de départ reçoit également un ou plusieurs autres additifs désirables pour la fabrication du produit, tels que des sels (NaCl et autres), des substances aromatiques, des parfums, des cultures acides et des colorants.
